# EUROPÄISCHE PATENTSCHRIFT

(11) **EP 0 412 279 B1**
(45) Veröffentlichungstag und Bekanntmachung des Hinweises auf die Patenterteilung: **31.08.1994**
(21) Anmeldenummer: 90112320.8
(22) Anmeldetag: 28.06.1990
(51) Int. Cl.: F16H 63/36

(54) **Schaltvorrichtung für ein Zahnräder-Wechselgetriebe eines Kraftfahrzeuges**
Gear change device for a stepped toothed gearing of an automotive vehicle
Dispositif de changement de vitesses pour la boîte de vitesses d'une voiture

(30) Priorität: 07.08.1989 DE 3929678
(43) Veröffentlichungstag der Anmeldung: 13.02.1991
(73) Patentinhaber: Dr.Ing.h.c. F. Porsche Aktiengesellschaft, 70435 Stuttgart (DE)
(72) Erfinder: Doster, Klaus, Dipl.-Ing., D-7433 Frickenhausen 3 (DE); Müller, Huber, Dipl.-Ing., D-7533 Tiefenbronn (DE)

(56) Entgegenhaltungen:
- EP-A- 0 117 341
- DE-A- 3 827 571
- DE-C- 3 125 632
- FR-A- 2 433 430
- US-A- 1 880 064
- US-A- 3 238 807

## Beschreibung

Die Erfindung betrifft eine Schaltvorrichtung für ein synchronisiertes Zahnräder-Wechselgetriebe eines Kraftfahrzeugs nach dem Oberbegriff des Anspruchs 1.

Eine ähnliche Betätigungsvorrichtung für ein Gangschaltgetriebe ist in der Zeitschrift "Sport Auto" 4/1988, Seite 127, beschrieben. Mit einem ersten, vom Gangschalthebel betätigten Bowdenzug werden die Getriebegänge vorgewählt, mit einem zweiten Bowdenzug werden die einzelnen Getriebegänge über Schaltgabeln und Synchronisierkupplungen geschaltet. Als Verbindung von den Schaltgabeln zu der durch die Bowdenzüge betätigten Vorwählwelle und Schaltwelle dient eine Betätigungsvorrichtung, wie sie aus DE-PS 31 25 632 bekannt ist. Die Schaltwelle ist mit einem radial abstehenden Schaltfinger versehen, welcher in Schaltgassen bildende Ausnehmungen von Schaltschienen eingreift. Die auf die Schaltgabeln einwirkenden Schaltschienen sind quer zur Schaltwelle bewegbar. Durch Verschieben des Schaltfingers in Achsrichtung der Schaltwelle werden die Getriebegänge vorgewählt, durch Verschwenken des Schaltfingers sind die Getriebegänge schaltbar. Die neben der gewählten Schaltgasse liegenden Schaltschienen sind jeweils durch Nocken gesperrt, die einstückig mit dem Schaltfinger ausgebildet sind und von innen an kreisbogenförmigen Wandteilen der Schaltschienen anliegen.

Ferner ist eine Schaltvorrichtung bekannt, DE 1 430 227, bei der Schaltschienen mit einer U-förmige Schenkel aufweisenden Formfeder zusammenwirken. Die Schenkel greifen nur an einer Seite der Schaltschienen an, was zu keiner befriedigenden Funktion führen dürfte. Hinzu kommt, daß an den Schenkeln mehrere Sicken mit unterschiedlichen Beabstandungen vorgesehen sind, die in korrespondierende Ausnehmungen hineinragen, was die Bestrebungen, enge Toleranzen einzuhalten, um einen leichtgängigen Schaltvorgang sicherzustellen, erschwert.

Um eine präzise Schaltung zu realisieren, ist es aber auch erforderlich, die jeweils zu betätigende Schaltschiene während des Schaltvorgangs exakt zu führen und in der jeweiligen Schaltposition zu arretieren.

Die Aufgabe der Erfindung besteht darin, eine einfache und kostengünstig herstellbare Verrastung zu schaffen, mit der alle Schaltschienen zueinander und gegenüber dem Getriebegehäuse arretierbar sind.

Zur Lösung dieser Aufgabe dienen die kennzeichnenden Merkmale des Anspruchs 1. Da am Getriebegehäuse bzw. einem mit ihm starr verbundenen Bauteil eine Formfeder befestigt ist, die formschlüssig in alle Schaltschienen eingreift, ist die gegenseitige Lage der Schaltschienen und ihre Position zum Gehäuse eindeutig festgelegt.

In vorteilhafter Ausgestaltung der Erfindung nach Anspruch 2 ist die Formfeder im Querschnitt U-förmig ausgeführt, umgreift zangenartig mit den U-Schenkeln die Schaltschienen an ihren Ober- und Unterseiten und rastet mit den an den Enden der U-Schenkel ausgebildeten Sicken in entsprechende geformte Vertiefungen der Schaltschienen ein. Zweckmäßigerweise liegen die Vertiefungen an jeweils zwei an den Schaltschienen angebrachten Nockenerhebungen; sie legen eine neutrale Mittellage, eine linke und rechte Schaltposition fest. Die Vertiefungen bzw. Nockenerhebungen an den Schaltschienen können gleichzeitig mit einer V-Ausnehmung ausgestanzt werden, an der die Sperrnocken eines Schaltstücks anliegen. Wird eine Schaltschiene mit dem Schaltfinger des Schaltstücks in eine linke oder rechte Schaltposition gebracht, so hebt die Formfeder bei diesem Schaltvorgang von den anderen Schaltschienen ab. Diese sind aber dadurch verrastet, daß die Sperrnocken an ihren V-Ausnehmungen anliegen.

Ein Ausführungsbeispiel der Erfindung ist in der Zeichnung dargestellt und wird nachfolgend näher erläutert.

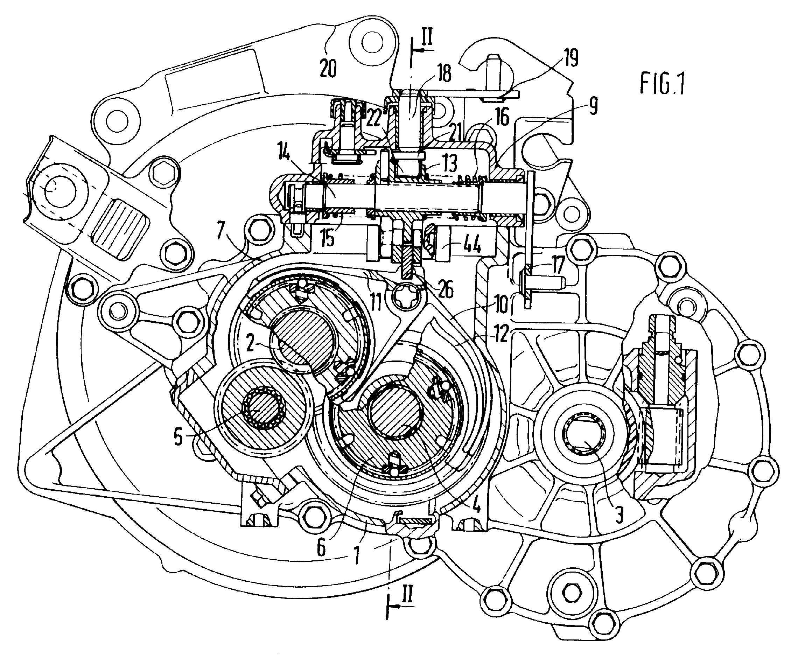

Es zeigen
- Fig. 1: Querschnitt einer Schaltvorrichtung für ein 5-Gang-Getriebe,

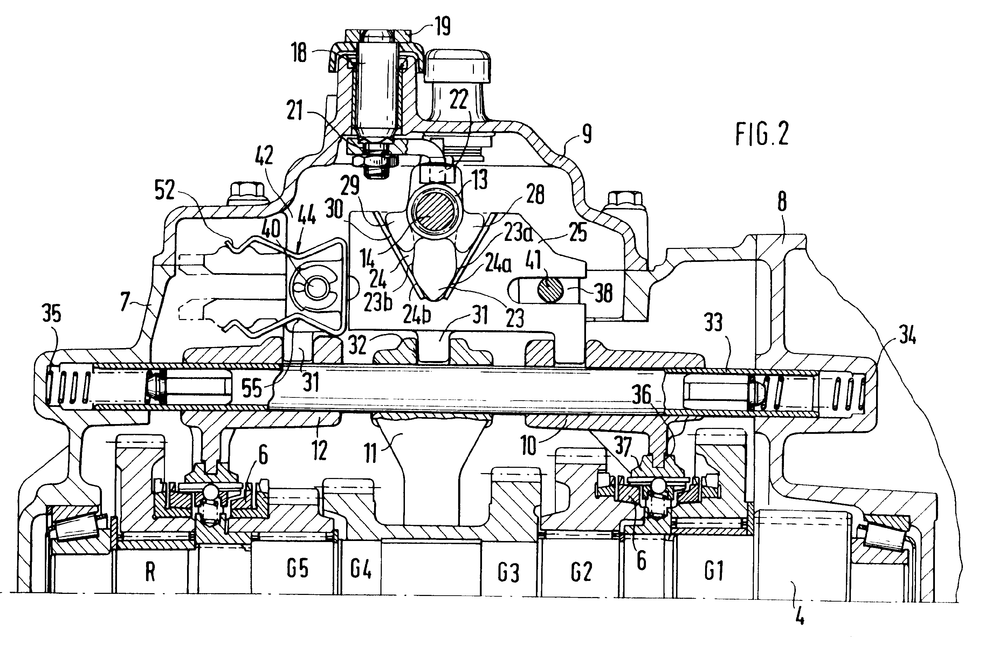

- Fig. 2: Längsschnitt der Schaltvorrichtung nach Linie II-II der Fig. 1,

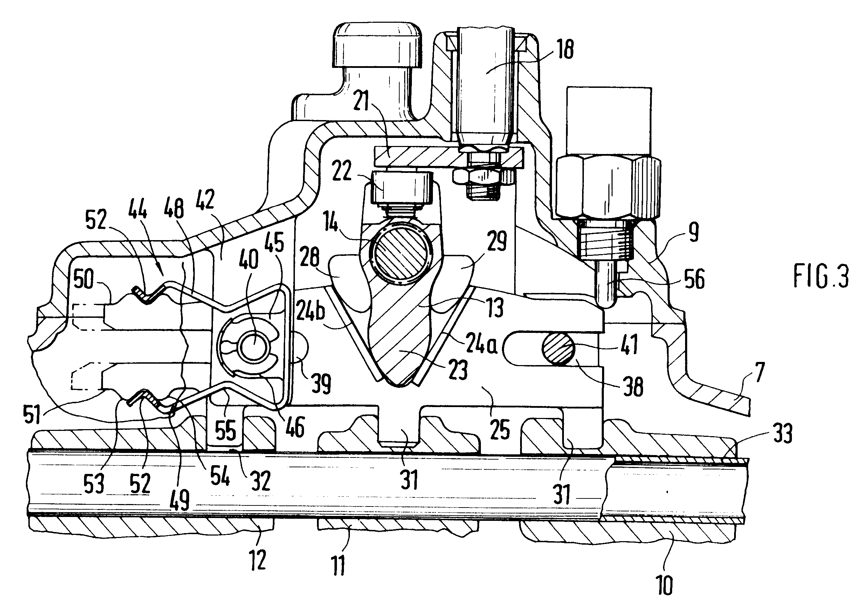

- Fig. 3: vergrößerter Teil des Längsschnittes nach Fig. 2,

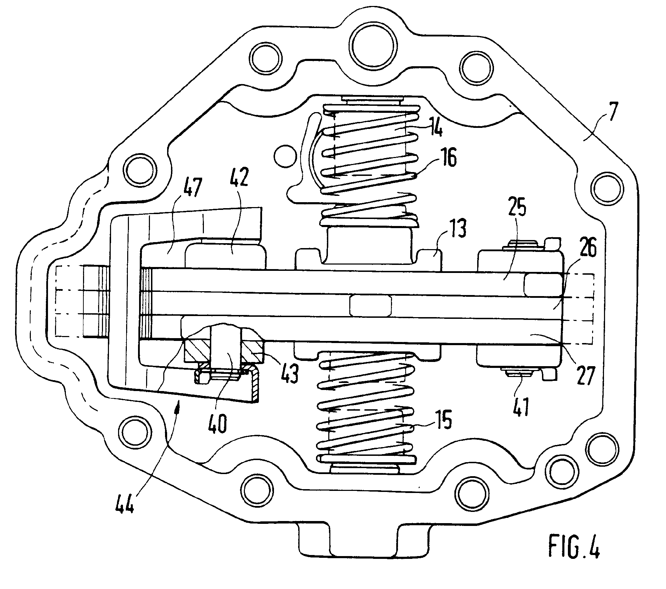

- Fig. 4: Draufsicht zu Fig. 3 bei abgenommenem Deckel.

In einem Getriebegehäuse 1 eines Kraftfahrzeugs sind zueinander parallel eine vom Motor angetriebene Antriebswelle 2, eine die Vorderachse 3 des Kraftfahrzeugs antreibende Abtriebswelle 4 und eine Zwischenwelle 5 für den Rückwärtsgang R gelagert. Die aus jeweils einem Festrad und einem mit ihm kämmenden Losrad bestehenden Getriebegänge G1, G2, G3, G4 und G5 sowie der Rückwärtsgang R sind in dieser Reihenfolge auf der Antriebswelle 2 bzw. Abtriebswelle 4 angeordnet und mit ihnen mittels Synchronisierkupplungen 6 verbindbar.

In seinem oberen Bereich ist an das Getriebegehäuse 1 ein Schaltgehäuse 7 angegossen und gemeinsam mit dem Getriebegehäuse 1 durch einen stirnseitigen Lagerdeckel 8 verschlossen. Auf das oben offene Schaltgehäuse 7 ist ein Dekkel 9 aufgeschraubt, der die gesamte Betätigungsvorrichtung für die in die Schiebemuffen der Synchronisierkupplungen 6 eingreifenden Schaltgabeln 10, 11 und 12 enthält. Als zentrales Glied der Betätigungsvorrichtung dient ein Schaltstück 13, das mit einer Schaltwelle 14 mittels Kerbzahnverbindung drehmomentübertragend verbunden ist und zum Vorwählen der Gänge auf der Schaltwelle 14 entgegen der Kraft einer links an ihm anliegenden Schraubenfeder 15 und einer rechten Schraubenfeder 16 längsverschieblich ist. Die Schaltwelle 14 ist mit einem stirnseitig angebrachten Hebel 17 an einem nicht dargestellten, zu einem Gangschalthebel führenden Bowdenzug angelenkt. Die Vorwählbewegung wird mit einer Vorwählwelle 18 ausgeführt, die senkrecht zur Schaltwelle 14 im Deckel 9 gelagert ist und mit einem stirnseitigen Hebel 19 an einen ebenfalls mit dem Gangschalthebel verbundenen Bowdenzug 20 angelenkt ist.

Am anderen Ende trägt die Vorwählwelle 18 einen Wählhebel 21, der mit einem Lager 22 an der Oberseite des Schaltstücks 13 eingreift. Diametral zu dem Lager 22 gegenüberliegend ist an der Rohrnabe des Schaltstücks 13 ein Schaltfinger 23 angegossen, der in durchgehende V-Ausnehmungen 24 von drei aneinander anliegenden Schaltschienen 25, 26, 27 einführbar ist. Senkrecht zum Schaltfinger und axial zu ihm versetzt sind an dem Schaltstück 13 zwei radial vorstehende Sperrnocken 28, 29 angebracht; sie bilden mit der durch den Schaltfinger 23 und das Lager 22 gehenden Mittelebene des Schaltstücks 13 ein Kreuz. Die Außenkontur 30 der Sperrnocken 28, 29 ist kreisbogenförmig und ist in V-Ausnehmungen 24 der Schaltschienen 25, 26, 27 einführbar. Die Sperrnocken 28, 29 sind in Längsrichtung des Schaltstücks 13 so zum Schaltfinger 23 angeordnet, daß, wenn der Schaltfinger 23 in die V-Ausnehmung 24 der einen Schaltschiene 25 eingreift, die Sperrnocken 28, 29 in die V-Ausnehmungen 24 der beiden anderen Schaltschienen 26, 27 eingreifen und sie unverschieblich arretieren.

Jede der drei Schaltschienen 25, 26, 27 trägt an ihrer Unterseite eine Schaltnase 31, wobei die Schaltnase 31 der mittleren Schaltschiene 26 in eine Ausnehmung 32 der mittleren Schaltgabel 11, die Schaltnasen 31 der linken und rechten Schaltschienen 25, 27 in die linke Schaltgabel 12 bzw. rechte Schaltgabel 10 eingreifen.

Die Schaltgabeln 10, 11, 12 sind auf einem zur Abtriebswelle 4 parallelen Führungsrohr 33 längsbeweglich geführt, das im Schaltgehäuse 7 gelagert und ihm gegenüber durch beidseitige Federn 34 und 35 längsbeweglich abgestützt ist, um ein Verklemmen der Schaltgabeln 10, 11, 12 zu vermeiden. Die Schaltgabeln greifen mit ihren Gabeln in Ringausdrehungen der die Synchronisierkupplungen 6 betätigenden Schiebemuffen 37 ein.

Die Schaltschienen 25, 26, 27 weisen beidseitig Schlitze 38, 39 auf, die parallel zum Führungsrohr 33 verlaufen. In die Schlitze sind Stifte 40, 41 eingepaßt, die in Rippen 42, 43 des Deckels 9 befestigt sind.

Am Stift 40 ist eine U-förmige Formfeder 44 mit im Stegbereich angebrachten Federklauen 45, 46 befestigt. Die Schaltschienen 25, 26, 27 liegen in einem mittigen, von der Stegseite her eingestochenen U-Ausschnitt 47 der Formfeder 44. Die U-Schenkel 48, 49 der Formfeder 44 umfassen zangenartig die Schaltschienen 25, 26, 27 an ihren Oberseiten 50 und 51 und rasten mit ihren Sicken 52 in der gezeichneten Lage in mittige Vertiefungen der Schaltschienen 25, 26, 27 ein, die zwischen zwei Nockenerhebungen 53, 54 gebildet sind. Zur Versteifung sind die U-Schenkel mit Einknickungen 55 versehen.

Wird eine Schaltschiene in eine linke Schaltposition bewegt, so werden die Sicken 52 aus der mittigen Vertiefung herausgehoben, überstreichen die Kuppe der rechten Nockenerhebung 54 und liegen dann federnd an ihrer rechten Flanke an. Entsprechend läuft auch der Schaltvorgang nach der linken Seite ab. Während eine Schaltschiene nach links oder rechts geschaltet wird, heben die Sicken 52 von den nicht geschalteten Schaltschienen ab. Diese sind jedoch dadurch in ihrer mittigen Nullage arretiert, daß die Sperrnocken 28, 29 an den V-Ausnehmungen 24 während des ganzen Schaltvorgangs entlanggleiten und so die Schaltschienen unverschieblich festhalten. Zum Erfassen und Fernübertragen der Schaltposition dient ein von den Schaltschienen 25, 26, 27 betätigter Schaltkontakt 56.

## Patentansprüche

1. Schaltvorrichtung für ein synchronisiertes Zahnräder-Wechselgetriebe eines Kraftfahrzeuges, bei welchem das Schalten der Gänge (G 1, G 2, G 3, G 4 und G 5) mitttels eines Schaltfingers (23) erfolgt, der mit mehreren parallel zueinander angeordneten Schaltstangen in der Ebene einer gemeinsamen Schaltgasse zusammenarbeitet, wobei die Schaltstangen (24, 25, 26) mit einer U-förmige Schenkel (48, 49) aufweisenden Formfeder (44) in Eingriff steht, die an ihren Schenkeln (48, 49) in Vertiefungen der Schaltschienen (25, 26, 27) eingreifende Sicken (52) besitzt,
**dadurch gekennzeichnet,** daß
die Schenkel (48, 49) der Formfeder (44) sämtliche Schaltstangen (24, 25, 26) zangenartig umfassen und mit ihren Sicken (52) in entsprechend geformte Vertiefungen an der Oberseite (50) und der Unterseite (51) der Schaltschienen (24, 25, 26) eingreifen.

2. Schaltvorrichtung nach Anspruch 1, dadurch gekennzeichnet, daß der Stegbereich der Formfeder (44) an einem gehäusefesten Stift (40) befestigt ist, an dem die Schaltschienen (25, 26, 27) parallel zu einem gehäusefesten Führungsrohr (33) für die Schaltgabeln (10, 11, 12) längsgeführt sind.

3. Schaltvorrichtung nach Anspruch 1, dadurch gekennzeichnet, daß die Formfeder (44) vom Steg her einen mittigen, U-förmigen Ausschnitt (47) aufweist, in dem die Schaltschienen (25, 26, 27) angeordnet sind.

4. Schaltvorrichtung nach Anspruch 1, dadurch gekennzeichnet, daß jede Schaltschiene (25, 26, 27) an ihrer Oberseite (50) und Unterseite (51) zwei Nockenerhebungen (53, 54) aufweist, an denen die Sicken (52) der U-Schenkel (48, 49) federnd anliegen und so eine linke, eine mittige und eine rechte Schaltposition der Schaltschienen (25, 26, 27) festlegen.

5. Schaltvorrichtung nach einem der Ansprüche 1 bis 4, dadurch gekennzeichnet, daß zum Schalten von fünf Vorwärtsgängen und einem Rückwärtsgang drei Schaltschienen (25, 26, 27) verwendet werden.

6. Schaltvorrichtung nach Anspruch 5, dadurch gekennzeichnet, daß während des Betätigens eine Schaltschiene (26) die beiden anderen Schaltschienen (25,27) durch kreisförmig begrenzte Sperrnocken (28,29) des Schaltstücks (13), die an den V-Ausnehmungen (24) der Schaltschienen (25, 27) entlanggleiten, verriegelt sind.

## Claims

1. A shifting device for a synchronized gearbox of a motor vehicle, in which the gears (G1, G2, G3, G4 and G5) are shifted by means of a gear-shift finger (23) cooperating with a plurality of gear-shift rods arranged parallel to one another in the plane of a common gear-shift channel, wherein the gear-shift rods (24, 25, 26) engage with a U-shaped spring (44) having arms (48, 49) provided with corrugations (52) which engage in depressions in the gear-shift rails (25, 26, 27), **characterized in** **that** the arms (48, 49) of the spring (44) embrace all the gear-shift rods (24, 25, 26) in the manner of pincers and engage with their corrugations (52) in correspondingly shaped depressions on the top (50) and underside (51) of the gear-shift rails (24, 25, 26).

2. A shifting device according to Claim 1, **characterized in that** the web area of the spring (44) is secured to a pin (40) which is fixed to the housing and on which the gear-shift rails (25, 26, 27) are guided longitudinally parallel to a guide tube (33), fixed to the housing, for the gear-shift forks (10, 11, 12).

3. A shifting device according to Claim 1, **characterized in that** starting from the web the spring (44) comprises a central, U-shaped recess (47) in which the gear-shift rails (25, 26, 27) are arranged.

4. A shifting device according to Claim 1, **characterized in that** the top (50) and underside (51) of each gear-shift rail (25, 26, 27) have two raised cam portions (53, 54) against which the corrugations (52) of the U-shaped arms (48, 49) rest resiliently and thus set a left-hand, a central and a right-hand shifting position of the gear-shift rails (25, 26, 27).

5. A shifting device according to one of Claims 1 to 4, **characterized in that** three gear-shift rails (25, 26, 27) are used for shifting five forward gears and one reverse gear.

6. A shifting device according to Claim 5, **characterized in that** while one gear-shift rail (26) is actuated the two other gear-shift rails (25, 27) are locked by locking cams (28, 29) of the gear-shift member (13), the locking cams (28, 29) being defined by a circle and sliding along the V-shaped recesses (24) in gear-shift rails (25, 27).

## Revendications

1. Dispositif de changement de vitesse pour une boîte de vitesses synchronisée d'un véhicule automobile, dans lequel la commutation des rapports (G 1, G 2, G 3, G 4 et G 5) s'effectue au moyen d'un doigt de commutation (23), qui coopère avec plusieurs tiges de commutation parallèles entre elles dans le plan d'une voie de commutation commune, les tiges de commutation (24, 25, 26) étant en prise avec un ressort façonné (44), présentant des branches (48, 49) en U, lequel ressort possède sur ses branches (48, 49) des moulures (52) s'engageant dans des creux des rails de commutation (25, 26, 27), caractérisé en ce que les branches (48, 49) du ressort façonné (44) entourent en pince toutes les tiges de commutation (24, 25, 26) et s'engagent, avec leurs moulures (52), dans des creux de forme correspondante pratiqués sur la face supérieure (50) et la face inférieure (51) des rails de commutation (24, 25, 26).

2. Dispositif de changement de vitesse selon la revendication 1, caractérisé en ce que la zone du dos du ressort façonné (44) est fixée sur un goujon (40) solidaire de la boîte, sur lequel les rails de commutation (25, 26, 27) sont guidés longitudinalement, parallèlement à un tube de guidage (33) solidaire de la boîte, pour les fourches de commutation (10, 11, 12).

3. Dispositif de changement de vitesse selon la revendication 1, caractérisé en ce que le ressort façonné (44) présente, à partir du dos, une découpe (47) centrale en U, dans laquelle sont placés les rails de commutation (25, 26, 27).

4. Dispositif de changement de vitesse selon la revendication 1, caractérisé en ce que chaque rail de commutation (25, 26, 27) présente sur sa face supérieure (50) et sa face inférieure (51) deux reliefs de came (53, 54) contre lesquels s'appliquent en formant ressort les moulures (52) des branches de U (48, 49) et définissent ainsi une position de commutation gauche, une position centrale et une position droite des rails de commutation (25, 26, 27).

5. Dispositif de changement de vitesse selon l'une des revendications 1 à 4, caractérisé en ce que pour la commutation de cinq marches avant et d'une marche arrière on utilise trois rails de commutation (25, 26, 27).

6. Dispositif de changement de vitesse selon la revendication 5, caractérisé en ce que pendant l'actionnement d'un rail (26), les deux autres rails (25, 27) sont verrouillés par des cames d'arrêt (28, 29), en cercle, de la pièce de commutation (13), qui glissent le long des évidements en V (24) des rails de commutation (25, 27).
